# FASCICULE DE BREVET EUROPEEN

(11) **EP 2 371 692 B1**
(45) Date de publication et mention de la délivrance du brevet: **12.03.2014**
(21) Numéro de dépôt: 11159738.1
(22) Date de dépôt: 25.03.2011
(51) Int. Cl.: B62M 1/10

(54) **Deux-roues électrique**
elektrisches Fahrrad
electrical bicycle

(30) Priorité: 01.04.2010 FR 1052487
(43) Date de publication de la demande: 05.10.2011
(73) Titulaire: MATRA MANUFACTURING & SERVICES, 75016 Paris (FR)
(72) Inventeur: Bonneville, Jacques, 77400, LAGNY SUR MARNE (FR)
(74) Mandataire: Cabinet Plasseraud

(56) Documents cités:
- DE-A1- 19 848 602

## Description

La présente invention se rapporte à un deux-roues électrique, en particulier un deux-roues de type vélo ou bicyclette à assistance de pédalage électrique qui a un succès grandissant en utilisation urbaine.

Plus particulièrement, il s'agit d'un deux-roues comprenant :
- un premier élément de cadre s'étendant depuis une extrémité supérieure portant un boîtier de pivotement d'une roue avant jusqu'à une extrémité inférieure,
- un deuxième élément de cadre s'étendant depuis une extrémité supérieure recevant un ensemble de selle, jusqu'à une extrémité inférieure solidaire du premier élément de cadre,
- un boîtier de batterie agencé dans un espace de logement de batterie en configuration de roulage, et
- un moteur électrique d'entraînement d'une des roues.

Le spécialiste des cadres de vélos comprendra bien entendu que le premier élément de cadre correspond au tube diagonal, ou "down tube" en anglais, le deuxième élément de cadre correspond au tube de selle, et les organes de support de roue arrière correspondent aux bases ou "chain stays" selon la terminologie usuelle. Toutefois, pour éviter une interprétation excessivement limitée de la protection, ces termes n'ont pas été retenus. En effet, il peut s'agir de tubes creux de section constante, mais aussi d'éléments pleins ou de section variable, ou encore de plusieurs pièces assemblées entre elles par soudure ou toute autre technique.

Les cadres de vélos sont le résultat d'une longue évolution ayant abouti à des formes relativement standards en fonction de l'utilisation, qui offrent un compromis satisfaisant entre de nombreux critères. Parmi ces critères, on peut citer notamment la rigidité du cadre, sa légèreté, son caractère pratique pour l'utilisation en question et ses caractéristiques géométriques qui ont une influence notable sur le comportement dynamique du vélo.

L'apparition récente de deux-roues à moteur électrique, que ce soit pour une simple assistance au pédalage ou comme moyen principal de propulsion, nécessite bien entendu l'emport d'une batterie qui est un élément particulière lourd et présente une certaine sensibilité aux chocs. L'intégration d'une batterie dans un cadre ayant l'une des configurations habituelles pour les vélos pose des problèmes.

Parmi les solutions actuellement retenues, il est connu de placer une batterie de forme allongée derrière le tube de selle. Cette solution n'est pas entièrement satisfaisante notamment du fait qu'elle déplace le centre de gravité et nécessite une modification sensible des haubans, d'où un risque de faiblesse structurelle du cadre à ce niveau. Elle n'est pas non plus entièrement satisfaisante pour réaliser un système de batterie facilement amovible.

Une autre solution est de loger une batterie dans moyeu agrandi de l'une, voire des deux-roues. Le comportement du vélo est alors peu modifié et sa structure quasi identique à celle d'un vélo usuel ce qui garantit une solidité et un comportement satisfaisants. Néanmoins, cette solution nécessite une conception des batteries et de leurs connexions sensiblement plus onéreuses. De plus, dans ce cas, il est quasiment exclu de pouvoir réaliser un montage amovible permettant à l'utilisateur de l'enlever et de la replacer aisément. Or, les utilisateurs urbains ne disposent bien souvent pas de moyen d'alimentation électrique permettant de recharger le vélo dans son lieu de garage. Ils sont donc contraints d'enlever et replacer la batterie pour recharger celle-ci dans leur domicile.

Le document DE 198 48 602 présente un concept, où la batterie est logée non loin d'un marchepied du cadre en accord avec le préambule de la revendication 1.

La présente invention vise donc à améliorer l'intégration d'une batterie dans un deux-roues électrique en ayant pour objectif d'améliorer les systèmes existants par rapport à l'un ou l'autre des problèmes évoqués ci-dessus.

A cet effet, la présente invention a pour objet un deux-roues du type précité, caractérisé en ce que l'espace de logement de batterie est délimité au moins dans le plan vertical par une portion inférieure du premier élément de cadre, une portion inférieure du deuxième élément de cadre, et un ensemble de marchepied, lesdites portions inférieures présentant des extrémités basses reliées entre elles et des extrémités hautes entre lesquelles s'étend l'ensemble de marchepied en configuration de roulage, et en ce que l'ensemble de marchepied présente à une extrémité une articulation reliant ledit ensemble de marchepied de manière pivotante à l'une des portions inférieures.

La batterie ainsi est agencée dans la partie basse du cadre, partie qui peut être encore plus basse que pour les cadres de vélo usuels en adoptant certaines des dispositions préférentielles ci-après. La batterie proprement dit et son boîtier sont ainsi protégés par le cadre qui passe dessous, tandis que le marchepied protège le côté supérieur. Le boîtier de batterie reste accessible car il n'est pas entourée de chaque côté par des éléments du cadre. Il est notamment possible de le sortir latéralement du côté opposé au plateau de pédalier en positionnant correctement la pédale. Néanmoins des protections latérales peuvent être prévues, et l'accessibilité peut encore être améliorée grâce à certaines des dispositions ci-après.

Dans des modes de réalisation préférés, on peut avoir recourt en outre à l'une ou l'autre des dispositions suivantes.

La portion inférieure du premier élément de cadre présente une forme arquée de concavité sensiblement orientée vers l'ensemble de selle. La portion inférieure du deuxième élément de cadre peut également présenter une forme arquée avec une concavité orientée sensiblement vers l'avant. Ceci afin d'augmenter la place disponible dans le bas du cadre.

L'ensemble de marchepied s'étend sensiblement horizontalement avec une surface supérieure située à une hauteur comprise entre la hauteur de l'axe des roues et 45 cm. Il a été déterminé qu'avec un marchepied compris dans cette plage de hauteur l'utilisation en ville restait tout aussi pratique qu'avec un cadre ouvert usuel, et que le marchepied procurait même un élément de confort à l'arrêt.

La portion inférieure du deuxième élément de cadre comporte un boîtier de pédalier, ledit boîtier étant situé à distance de l'extrémité basse de ladite portion inférieure. Cette disposition inhabituelle du boîtier de pédalier permet d'abaisser la portion inférieure du premier élément de cadre, et ainsi d'augmenter l'espace de logement de batterie.

L'ensemble de marchepied présente, à une extrémité opposée à l'articulation, un dispositif de verrouillage reliant ledit ensemble de marchpied à l'autre portion inférieure de manière déverrouillable. Grâce à disposition, il est possible d'accéder à la batterie par le haut, voire de pouvoir relever la batterie dans une configuration d'enlèvement.

L'ensemble de marchepied présente un organe extérieur de raccordement électrique, ledit organe de raccordement étant agencé à proximité de l'articulation de l'ensemble de marchepied. Cette disposition à l'avantage de permettre une connexion électrique simple avec un câble de faible longueur.

Le boîtier de batterie est attaché de manière amovible à l'ensemble de marchepied articulé. Il est ainsi possible d'écarter le marchepied du cadre, puis de détacher le boîtier de batterie dans une position plus pratique.

L'articulation de l'ensemble de marchepied, de préférence liée au deuxième élément de cadre, permet un pivotement autour d'un axe horizontal transverse permettant audit ensemble de marchepied de passer de la configuration de roulage à une configuration sensiblement verticale, appelée "configuration d'enlèvement". Grâce à cette disposition l'utilisateur n'a pas à se pencher fortement pour retirer le boîtier de batterie.

Le dispositif de verrouillage est adapté à verrouiller l'ensemble de marchepied dans la configuration d'enlèvement. La configuration d'enlèvement est ainsi stable, ce qui facilite l'opération d'enlèvement et de replacement du boîtier de batterie, opération qui peut même être effectuée d'une main.

Le dispositif de verrouillage comprend un organe mobile monté sur l'ensemble de marchepied et un premier organe de gâche monté de manière fixe sur l'un des éléments de cadre, et un deuxième organe de gâche monté de manière fixe sur l'autre élément de cadre, ledit organe mobile étant sollicité en position verrouillée et les premier et deuxième organes de gâche étant configurés pour assurer automatiquement le verrouillage lorsque l'ensemble de marchepied atteint l'une des configurations de roulage et d'enlèvement. Le système étant ainsi encore plus pratique et sûr.

Le boîtier de batterie et l'ensemble de marchepied sont attachés de manière amovible par un ensemble de rails autorisant un désengagement selon un mouvement de translation sur une course de désengagement sensiblement parallèle à l'ensemble de marchepied et selon une direction opposée à l'articulation de celui-ci. Une simple traction permet alors de désengager la batterie.

D'autres caractéristiques et avantages ressortiront de la description qui va suivre, donnée à titre d'exemple non limitatif d'un mode de réalisation préférentiel, en regard des figures dans lesquelles :
- la figure 1 est une vue en perspective d'un vélo présentant un espace de logement d'un boîtier de batterie selon l'invention et en configuration d'enlèvement.
- la figure 2 est une vue de côté agrandie de l'espace de logement de batterie en configuration de roulage.
- la figure 3 est une vue de dessus de figure 2 ;
- la figure 4 est une vue analogue à la figure 2 avec le boîtier de batterie en configuration d'enlèvement, et
- la figure 5 est une vue en perspective d'un ensemble de marchepied délimitant en partie l'espace de logement de batterie et d'un boîtier de batterie désengagé de cet ensemble.

Sur les différentes figures, les mêmes références désignent des éléments identiques ou similaires.

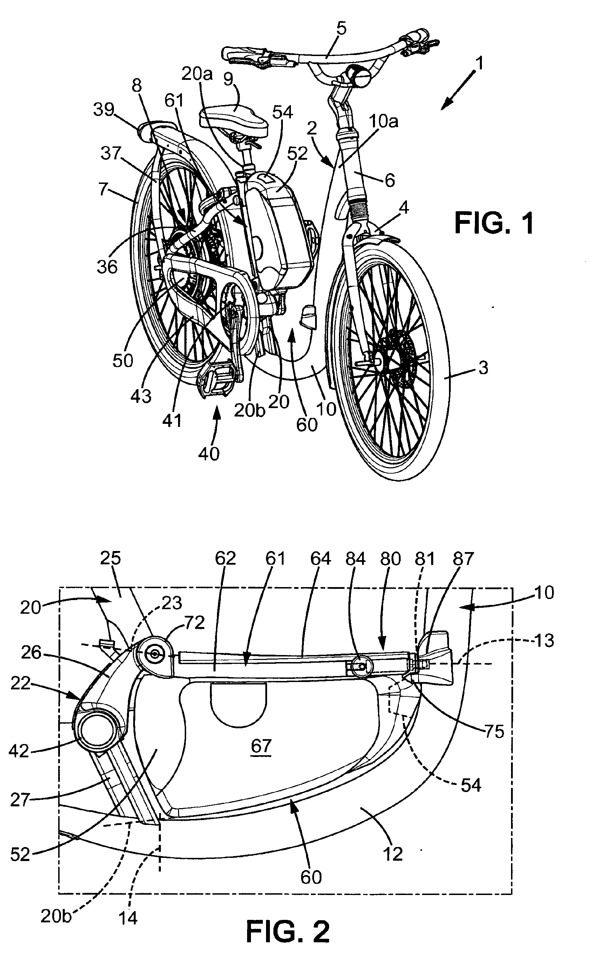

A la figure 1, est représenté un deux-roues 1 de type vélo de ville à cadre 2 ouvert.

Le vélo 1 comprend de manière bien connue une roue avant 3 portée par une fourche 4 solidaire d'un ensemble de guidon 5. La fourche 4 est montée pivotante à travers un boîtier de pivotement 6, ou boîtier de direction, solidaire du cadre 2. Le vélo 1 comprend également une roue arrière 7 portée par une fourche arrière 8 solidaire du cadre 2, ainsi qu'un ensemble de selle 9.

Le vélo 1 est un vélo à assistance électrique de pédalage. On comprendra toutefois de la suite de la description qu'il pourrait s'agir d'un type de deux-roues quelque peu différent, par exemple de type scooter ou moto légère à propulsion électrique, du moment que certaines caractéristiques du cadre 2 sont conservées.

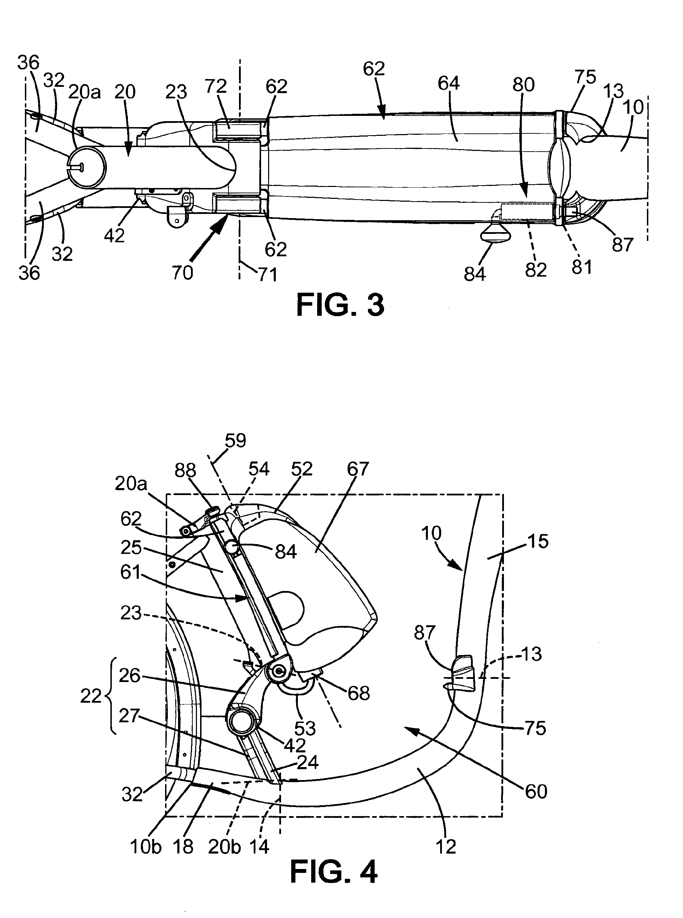

La cadre 2 comprend un premier élément de cadre 10 s'étendant depuis une extrémité supérieure 10a solidaire du boîtier de pivotement 6, jusqu'à une extrémité inférieure 10b visible à la figure 4. Le premier élément de cadre 10 correspond sensiblement à la pièce appelée "tube diagonal" dans le domaine des vélos. Il est en effet formé à partir d'un tube, mais auquel on fait subir des transformations de sorte qu'il présente des variations de section et des portions plus ou moins courbées. Des éléments additionnels sont également rapportés par soudage. Ce premier élément de cadre 10 pourrait toutefois être réalisé à partir de plusieurs éléments assemblés ou encore comporter des éléments pleins.

Sur le premier élément de cadre 10, on considère une portion inférieure 12 s'étendant entre une extrémité haute 13 et une extrémité basse 14 indiquées aux figures 2 et 4 par des lignes discontinues et dont la position sera définie ci-après. Le premier élément de cadre 10 comporte donc une portion haute 15 entre l'extrémité haute 13 et l'extrémité supérieure 10a. Dans le mode de réalisation représenté, une portion complémentaire 18 s'étend entre l'extrémité basse 14 et l'extrémité inférieure 10b. Les extrémités basse 14 et inférieure 10b pourraient toutefois être confondues et la portion complémentaire 18 absente.

Le cadre 2 comporte un deuxième élément de cadre 20 s'étendant depuis une extrémité supérieure 20a sur laquelle est montée l'ensemble de selle 9 comprenant un tube de selle, des moyens de réglage et la selle proprement dite, jusqu'à une extrémité inférieure 20b solidaire du premier élément de cadre 10. De manière analogue, on peut définir pour le deuxième élément de cadre 20 une portion inférieure 22 s'étendant depuis une extrémité haute 23 jusqu'à une extrémité basse confondue avec l'extrémité inférieure 20b. Le deuxième élément de cadre 20 présente donc une portion supérieure 25 ici formée par un tube rectiligne. Par contre, la portion inférieure 22 est formée de deux pièces (26, 27) relativement complexes qui forment un ensemble rigide indémontable avec le reste du cadre 2.

La fourche arrière 8 comprend de manière habituelle une paire d'éléments de base 32 s'étendant de part et d'autre de la roue arrière 7 depuis l'extrémité inférieure 10b du premier élément de cadre jusqu'à un support d'axe de la roue arrière. La fourche arrière 8 comprend également une paire de haubans 36 s'étendant du support d'axe au deuxième élément de cadre 20, et plus particulièrement à proximité de l'extrémité supérieure 20a de celui-ci. La fourche arrière 8 forme ainsi un ensemble rigide et léger capable de maintenir la roue arrière 7 dans un plan vertical aligné avec le plan vertical du cadre 2.

La partie arrière du vélo comprend également un garde-boue 39 supporté par une paire de haubans supplémentaires 37 qui sont ici solidaires du cadre, mais qui pourraient être bien entendu des éléments rapportés.

S'agissant d'un vélo, celui-ci comprend un ensemble de transmission 40 comprenant un pédalier 41 porté par un boîtier 42 visible à la figure 2, un organe de transmission, tel qu'une chaîne ou une courroie, masqué sur les figures par un carter 43 et un ou plusieurs pignons arrières.

Le vélo comprend également un système de propulsion électrique. Dans le mode de réalisation représenté, il s'agit d'un système d'assistance au pédalage, c'est-à-dire qui fonctionne de manière automatique, notamment en fonction de l'effort de pédalage exercé. Il pourrait toutefois s'agir d'un système dont la force de propulsion électrique est directement commandée par l'utilisateur.

Le système de propulsion comprend un moteur électrique 50 logé dans le moyeu de la roue arrière 7, une batterie électrique logée dans un boîtier de batterie 52 et une liaison par câble 53 entre la batterie et le moteur. Un module de commande et d'affichage, non visible, est également prévu sur l'ensemble de guidon 5 et est relié au moteur électrique 50 et au boîtier de batterie 52. Il permet de mettre en service l'assistance électrique selon différents modes et d'afficher des paramètres de fonctionnement ou l'état de charge de la batterie.

Le boîtier de batterie 52 peut comporter, outre les éléments de batterie proprement dits, des circuits électroniques pouvant remplir différentes fonctions comme notamment, déterminer l'état de charge de la batterie, mais aussi délivrer un signal de commande au moteur 50 à partir de signaux reçus de capteurs tels qu'un capteur de vitesse et un capteur de couple de pédalage. Le boîtier 52 se présente sous forme d'une coque extérieure rigide qui comporte un connecteur électrique pour transmettre d'une part une puissance électrique et d'autre part des signaux.

Le boîtier 52 présente également un organe de préhension 54 qui peut être réalisé sous forme d'un creux comme indiqué par une ligne discontinue. L'organe de préhension pourrait bien entendu être réalisé de manière différente, comme par exemple une partie saillante ou une pièce mobile faisant saillie du boîtier dans une configuration d'enlèvement de la batterie et pouvant être rabattue à la surface du boîtier pour une configuration de roulage.

Le boîtier de batterie 52 comprend également des moyens d'accrochage avantageusement formés par un rail 56. Le boîtier de batterie 52 peut également présenter un verrou à clé 58 pour actionner un système d'antivol de la batterie. Le boîtier de batterie 52 peut être un élément standard. Il présente toutefois un axe d'allongement principal 59 et le rail d'accrochage 56 est de préférence orienté selon une direction sensiblement parallèle à l'axe d'allongement 59.

Afin d'optimiser l'agencement de la batterie dans le vélo, un espace de logement de batterie 60 est défini dans le cadre 2 par la portion inférieure 12 du premier élément de cadre 10, la portion inférieure 22 du deuxième élément de cadre 20 et un ensemble de marchepied 61 qui s'étend entre une zone du premier élément de cadre 10, et une zone du deuxième élément de cadre 20 qui définissent les extrémités hautes 13 et 23 des portions inférieures 12 et 22. Les extrémités basses 14 et 20b des portions inférieures (12, 22) étant adjacentes, l'espace de logement de batterie 60 est ainsi entouré par une boucle continue dans le plan du cadre 2, c'est-à-dire dans le plan vertical.

Les portions inférieures (12, 22) faisant partie du cadre 2 sont nécessairement des organes solides qui peuvent résister à des chocs importants. Ainsi, le boîtier de batterie 52 est protégé contre des chocs avec des éléments faisant saillie du sol tels qu'une borne d'accrochage du vélo ou un trottoir.

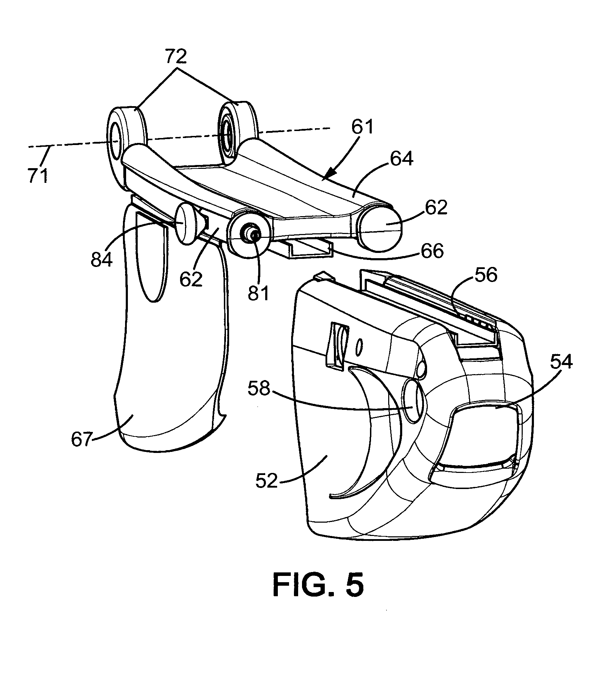

L'ensemble de marchepied 61 est de préférence également un ensemble solide ici formé de tubes métalliques latéraux 62 et recouvert sur la face supérieure par une plaque 64 formant le marchepied proprement dit. L'ensemble de marchepied 61 étant solide, il protège le boîtier de batterie 52, mais fournit avantageusement un organe de support pour l'accrochage de la batterie. Cet organe est ici réalisé par un rail 66 complémentaire du rail 56 du boîtier et relié aux tubes latéraux 62, comme cela est visible à la figure 5.

L'espace de logement de batterie 60 peut être également délimité latéralement par des éléments de protection fixes ou mobiles. Par exemple, sur les figures est représenté un cache latéral 67 sous forme d'une plaque plastique qui recouvre partiellement le flanc du boîtier de batterie 52. Il est en fait préféré de remplacer le cache latéral 67 par un sac souple suspendu de manière permanente à l'ensemble de marchepied 61 et muni d'une fermeture à glissière pour enfermer le boîtier de batterie 52 dans celui-ci. Un tel sac souple, par exemple réalisé en toile synthétique, permet de conserver le boîtier de batterie 52 parfaitement propre, même en cas de pluie, et il est toutefois parfaitement envisageable de ne prévoir aucune protection latérale, notamment si l'on prévoit un enlèvement latéral de la batterie du côté opposé du pédalier 41. En effet, l'expérience montre que les risques de chocs latéraux pouvant endommager le boîtier de batterie restent limités. Il faut noter que l'espace de logement de batterie 60 est situé dans une zone du cadre 2 qui n'est pas entouré latéralement par des éléments structurels, tels que la fourche arrière 8, la pédale gauche pouvant facilement être positionnée de manière adéquate. Un accès latéral facile au boîtier de batterie 52 est donc parfaitement possible, notamment si l'on réalise un ensemble de marchepied 61 fixé de manière permanente, par exemple par soudure, pour des raisons de coût.

L'ensemble marchepied 61 supporte également un connecteur électrique 68 auquel est raccordé le câble 54 d'alimentation du moteur 50. Les broches de ce connecteur sont orientées selon l'axe du rail 66 et agencées par rapport au connecteur complémentaire du boîtier de batterie 52 de sorte que l'engagement de l'ensemble de rails (56, 66) par translation guide l'engagement du connecteur 68 lié au cadre 2 avec le connecteur complémentaire du boîtier de batterie.

On notera que la portion inférieure 12 du premier élément de cadre 10 n'est pas rectiligne comme cela est habituel pour un tube diagonal, mais présente une forme courbe avec une cavité orientée vers le haut et vers l'arrière, approximativement en direction de l'ensemble de selle 9. En effet, le rayon de courbure moyen entre les extrémités haute et basse de cette portion, indiquées à la figure 4 par les traits interrompus 13 et 14, présente un centre de rotation approximativement situé à l'extrémité supérieure 20a du deuxième élément de cadre. Plus précisément, la portion inférieure 12 présente une courbure relativement prononcée dans sa partie haute et une portion basse plus rectiligne. Ainsi, la portion inférieure 12 est globalement située plus en avant par rapport à la portion correspondante d'un tube diagonal habituel.

La portion inférieure 22 du deuxième élément de cadre 20 présente elle aussi une courbure entre ses extrémités haute et basse (23, 24), de sorte que cette portion présente une concavité orientée vers l'avant. Ces courbures augmentent l'espace de logement de batterie 60. Cette portion inférieure 22 formée des deux courtes pièces (26, 27) soudées au boîtier de pédalier cylindrique 42, permet d'obtenir une solidité parfaitement satisfaisante, d'autant plus que le deuxième élément de cadre 20 subit des efforts de flexion limités grâce à la présence des haubans 36.

Par contre, pour le premier élément de cadre 10, il est préférable de le réaliser en une seule pièce et sans angle prononcé, surtout s'il s'agit d'un cadre 2 ouvert comme dans le mode de réalisation représenté.

Le fait de placer le boîtier de pédalier 42 sur la portion inférieure 22 du deuxième élément de cadre 20, et non pas à la jonction avec le premier élément de cadre 10, permet d'abaisser la portion inférieure 12 du premier élément de cadre 10 et d'augmenter encore l'espace 60 pour loger le boîtier de batterie. En effet, la position du boîtier de pédalier 42 ne peut être modifiée verticalement que de quelques dizaines de millimètres autour d'une hauteur d'environ 27 cm qui est considérée comme un optimum entre le confort de pédalage et le risque que les pédales touchent le sol en virage. Ici, l'axe du pédalier 41 est situé sensiblement dans la partie médiane de la portion inférieure 22 du deuxième élément de cadre 20. Une position plus haute par rapport à l'extrémité inférieure 20b de cet élément est possible. Toutefois, d'autres contraintes sont à prendre en considération. Il est notamment préférable que le premier élément de cadre 10 ne présente pas de zone située à une hauteur inférieure à 12 cm, pour éviter les contacts avec les obstacles habituels rencontrés en ville.

D'autre part, le fait que l'ensemble de marchepied 61, et plus précisément sa face supérieure 64 soit situé plus haut que l'axe du pédalier 41, permet également d'augmenter l'espace de logement de batterie 60. En particulier, une hauteur d'environ 35 cm s'avère offrir un très bon confort d'utilisation en particulier pour passer un pied à travers le cadre 2. Il est possible d'agencer la face supérieure 64 de l'ensemble de marchepied plus haut, mais de préférence sans dépasser une hauteur de 45 cm au-delà de laquelle ce confort se dégrade.

Comme cela est mieux visible à la figure 3, la face supérieure 64 est plus large horizontalement que les éléments de cadre 10 et 20. Cette largeur qui augmente légèrement vers l'avant, correspond en fait à la largeur d'une chaussure et cette face supérieure est configurée pour recevoir le pied d'un utilisateur. Bien que l'utilisation d'un marchepied avec un vélo semble a priori de peu d'intérêt, il est supposé et confirmé par les premiers essais que l'ensemble de marchepied 61 permet de faire reposer confortablement un pied dessus et peut être très apprécié des utilisateurs. En effet, lors d'une utilisation urbaine, l'utilisateur doit effectuer de nombreux arrêts et cette fonction de repose-pied de l'ensemble de marchepied 61 doit améliorer sensiblement le confort. La face supérieure 64 ne doit pas être sensiblement plus large, au risque de gêner le pédalage. Bien entendu, on comprendra que cette fonction de repose-pied ne doit pas être nécessairement remplie par l'organe 61 appelé "ensemble marchepied" pour améliorer l'agencement d'une batterie dans un vélo électrique.

Selon une caractéristique supplémentaire particulièrement avantageuse, l'ensemble de marchepied 61 est mobile par rapport au cadre 2 grâce à une articulation 70. L'articulation 70 permet de faire passer l'ensemble de marchepied 61 et le boîtier de batterie 52 monté de manière amovible sur celui-ci dans le mode de réalisation représenté, d'une configuration de roulage représentée à la figure 2 à une configuration d'enlèvement représentée aux figures 1 et 4. Cette configuration d'enlèvement est conçue pour faciliter davantage le retrait du boîtier de batterie 54 du cadre 2. Différentes articulations sont possibles pour réaliser cette fonction.

Dans le mode de réalisation préféré, l'articulation 70 est une liaison pivot présentant un axe 71 horizontal et perpendiculaire à la direction longitudinale du cadre 2. Elle est située à la liaison entre l'ensemble de marchepied 61 et le deuxième élément de cadre 20. L'articulation 70 est formée par des oeillets à 72 solidaires de l'extrémité arrière des tubes latéraux 62, et montés pivotants sur des pions situés à l'extrémité haute 24 à la portion inférieure 22. Dans la configuration de l'utilisation représentée à la figure 2, l'extrémité avant des tubes latéraux 62 vient reposer sur des butées 75 soudées sur le premier élément de cadre 10 au niveau de l'extrémité haute 13.

Un dispositif de verrouillage 80 permet d'immobiliser l'ensemble de marchepied 61 dans cette configuration de roulage. Le dispositif de verrouillage 80 comprend une targette 81 mobile en translation dans le tube latéral droit 62 et sollicité dans la position saillante, mieux visible à la figure 5, par ressort 82 indiqué en traits discontinus à la figure 3. Une poignée 84 permet de rétracter la targette 81 en comprimant le ressort 82. Ainsi à la targette 81 qui forme l'organe mobile du verrou peut être dégagé d'un creux formant un premier organe de gâche 87 situé légèrement au-dessus de la butée latérale droite 75.

On notera que l'organe de gâche 87 présente une face extérieure lisse et arrondie contre laquelle l'extrémité de la targette 81 peut glisser tout en étant repoussée par sa position rétractée.

Une disposition inversée de l'articulation 70 et du dispositif de verrouillage 80 est bien entendu possible. Néanmoins, il s'avère que la position de l'articulation 70 sur le deuxième élément de cadre 20 est plus ergonomique, l'utilisateur ayant plus naturellement tendance à se placer à un côté de l'ensemble de selle 9.

Comme cela est visible à la figure 4, un deuxième organe de gâche 88 est prévu à proximité de l'extrémité supérieure 20a du deuxième élément de cadre. Le deuxième organe de gâche 88 est agencé pour que la targette 81 coopère avec celui-ci lorsque l'ensemble de marchepied 61 est placé en configuration d'enlèvement. Le deuxième organe de gâche 88 présente une surface arrondie autour du creux recevant la targette, de sorte que celle-ci peut être repoussée par cette surface avant de venir s'engager automatiquement avec le creux de cet organe sous l'action du ressort 82.

L'agencement de la batterie dans l'espace de logement 60 ne modifie quasiment pas le comportement du vélo de par sa position basse. La structure et en particulier la solidité de la fourche arrière 8, ne sont pas affectées. L'enlèvement et le replacement du boîtier de batterie 52 est aisé puisque celle-ci est située dans une partie relativement accessible.

En particulier, dans le mode de réalisation représenté, les opérations d'enlèvement du boîtier de batterie 52 sont particulièrement aisées et intuitives. A partir de la configuration de roulage représentée à la figure 2, l'utilisateur exerce une traction vers l'arrière sur la poignée 84, ce qui libère le dispositif de verrouillage 80. Cette action se poursuit naturellement par un mouvement vers le haut, l'utilisateur étant généralement situé à côté de la selle, et l'ensemble de marchepied 61 avec le boîtier de batterie 52 pivote vers le haut. La targette 81 est guidée vers le deuxième organe de verrouillage 88 et coopère automatiquement avec la surface extérieure arrondie de celui-ci de sorte que le dispositif de verrouillage 80 s'engage automatiquement avec ce deuxième organe de gâche 88. La configuration d'enlèvement ainsi atteinte et représentée à la figure 4, est alors stable.

On notera que le boîtier de batterie 52 est dans une position sensiblement plus haute et que l'organe de préhension, ou poignée 54 agencé à l'opposé de l'articulation 70, fait face à l'utilisateur. Si toutefois, le boîtier de batterie 52 n'est pas visible car enfermé dans un sac souple, et il est alors judicieux de placer le système d'ouverture de ce sac, comme par exemple le curseur d'une fermeture à glissière, en regard de la poignée 54.

L'utilisateur exerce ensuite sur la poignée 54 une traction vers le haut, ce qui permet de dégager les rails 56 et 66 du système de montage amovible tout en dégageant le connecteur 68 du connecteur complémentaire du boîtier 52. Le mouvement de translation pour désengager les rails peut se faire sur une courte distance, et non pas nécessairement sur l'ensemble de leur longueur, en prévoyant des pattes et des échancrures sur les rails (56, 66).

Le replacement de la batterie et le retour à la configuration de roulage se font sensiblement selon le procédé inverse. Une fois le boîtier de batterie 52 réengagé avec les moyens de montage 66 de l'ensemble de marchepied 61, cet ensemble est déverrouillé de la position d'enlèvement par une action vers le bas sur la poignée 84. Cet ensemble 61 et le boîtier de batterie 52 pivotent vers le bas pour venir en contact avec les butées 75. Au cours de ce mouvement de pivotement, le dispositif de verrou 80 se verrouille automatiquement avec le premier organe de gâche 87 grâce à la surface extérieure lisse et arquée de celui-ci.

On notera que le connecteur 68 lié à l'ensemble de marchepied 61 est situé à proximité de l'articulation 70, de sorte qu'il n'est pas nécessaire de prévoir une très grande longueur libre de câble 54.

Le mode de réalisation décrit ci-dessus n'est nullement limitatif. On comprendra que la délimitation dans le plan vertical de l'espace de logement 60 peut être sensiblement différente en fonction de la forme donnée aux portions inférieures (12, 22) des éléments de cadre (10, 20), et de la forme de l'ensemble de marchepied 61 qui n'est pas nécessairement rectiligne. Toutefois, il est préférable que cette forme corresponde sensiblement à la forme extérieure du boîtier de batterie 52. Comme cela a déjà été mentionné, le montage articulé de l'ensemble de marchepied 61 n'est qu'une option, le boîtier de batterie 52 pouvant être aisément enlevé selon un mouvement latéral.

## Revendications

1. Deux-roues électrique comprenant :
- un premier élément de cadre (10) s'étendant depuis une extrémité supérieure portant un boîtier de pivotement (6) d'une roue avant, jusqu'à une extrémité inférieure (10b),
- un deuxième élément de cadre (20) s'étendant depuis une extrémité supérieure recevant un ensemble de selle (9), jusqu'à une extrémité inférieure (20b) solidaire du premier élément de cadre,
- un boîtier de batterie (52) agencé dans un espace de logement de batterie (60) en configuration de roulage, et
- un moteur électrique (50) d'entraînement d'une des roues,
l'espace de logement de batterie étant délimité au moins dans le plan vertical par une portion inférieure (12) du premier élément de cadre (10), une portion inférieure (22) du deuxième élément de cadre (20), et un ensemble de marchepied (61), lesdites portions inférieures présentant des extrémités basses (14, 20b) reliées entre elles et des extrémités hautes (13, 23) entre lesquelles s'étend l'ensemble de marchepied (61) en configuration de roulage,
**caractérisé en ce que** l'ensemble de marchepied (61) présente à une extrémité une articulation (70) reliant ledit ensemble de manière pivotante à l'une des portions inférieures (22; 12) .

2. Deux-roues selon la revendication 1, dans lequel la portion inférieure (12) du premier élément de cadre (10) présente une forme arquée de concavité sensiblement orientée vers l'ensemble de selle (9).

3. Deux-roues selon la revendication 1 ou 2, dans lequel la portion inférieure (22) du deuxième élément de cadre (20) présente une forme arquée de concavité orientée sensiblement vers l'avant.

4. Deux-roues selon l'une des revendications précédentes, dans lequel l'ensemble de marchepied (61) s'étend sensiblement horizontalement avec une surface supérieure (64) située à une hauteur comprise entre la hauteur de l'axe des roues et 45 cm.

5. Deux-roues selon l'une des revendications précédentes, dans lequel la portion inférieure (22) du deuxième élément de cadre (20) comporte un boîtier de pédalier (42), ledit boîtier étant situé à distance de l'extrémité basse (20b) de ladite portion inférieure.

6. Deux-roues selon l'une des revendications précédentes, dans lequel l'ensemble de marchepied (61) présente, à une extrémité opposée à l'articulation (70), un dispositif de verrouillage (80) reliant ledit ensemble de marchepied à l'autre portion inférieure (12;22) de manière déverrouillable.

7. Deux-roues selon l'une des revendications précédentes, dans lequel l'ensemble de marchepied (61) présente un organe extérieur de raccordement électrique (68), ledit organe de raccordement étant agencé à proximité de l'articulation (70).

8. Deux-roues selon l'une des revendications précédentes, dans lequel le boîtier de batterie (52) est attaché de manière amovible à l'ensemble de marchepied (61).

9. Deux-roues selon l'une des revendications 6 à 8, dans lequel l'articulation (70) de l'ensemble de marchepied (61), de préférence liée au deuxième élément de cadre (20), permet un pivotement autour d'un axe horizontal transverse (71) permettant audit ensemble de marchepied de passer de la configuration de roulage à une configuration sensiblement verticale, appelée "configuration d'enlèvement".

10. Deux-roues selon la revendication 9, dans lequel le dispositif de verrouillage (80) est adapté à verrouiller l'ensemble de marchepied dans la configuration d'enlèvement.

11. Deux-roues selon la revendication 10, dans lequel le dispositif de verrouillage (80) comprend un organe mobile (81) monté sur l'ensemble de marchepied (61) et un premier organe de gâche (87) monté de manière fixe sur l'un des éléments de cadre (10;20), et un deuxième organe de gâche (88) monté de manière fixe sur l'autre élément de cadre (20;10), ledit organe mobile (81) étant sollicité en position verrouillée et les premier et deuxième organes de gâche (87, 88) étant configurés pour assurer automatiquement le verrouillage lorsque l'ensemble de marchepied (61) atteint l'une des configurations de roulage et d'enlèvement.

12. Deux-roues selon l'une des revendications 8 à 11, dans lequel le boîtier de batterie (52) et l'ensemble de marchepied (61) sont attachés de manière amovible par un ensemble de rails (56, 66) autorisant un désengagement selon un mouvement de translation sur une course de désengagement sensiblement parallèle à l'ensemble de marchepied (61) et selon une direction opposée à l'articulation (70) de celui-ci.

## Patentansprüche

1. Elektrisches Zweirad, umfassend:
- ein erstes Rahmen-Element (10), das sich von einem oberen Ende, welches ein Schwenk-Gehäuse (6) für ein Vorderrad trägt, bis zu einem unteren Ende (10b) erstreckt,
- ein zweites Rahmen-Element (20), das sich von einem oberen Ende, welches eine Sattel-Anordnung (9) aufnimmt, bis zu einem unteren Ende (20b) erstreckt, das fest mit dem ersten Rahmen-Element verbunden ist,
- ein Batteriegehäuse (52), das in einer Fahrt-Konfiguration in einem Batterie-Aufnahmeraum (60) angeordnet ist, und
- einen Elektromotor (50) zum Antrieb von einem der Räder,
wobei der Batterie-Aufnahmeraum wenigstens in der vertikalen Ebene durch einen unteren Abschnitt (12) des ersten Rahmen-Elements (10), einen unteren Abschnitt (22) des zweiten Rahmen-Elements (20) und eine Trittbrett-Anordnung (61) begrenzt ist, wobei die unteren Abschnitte niedrige Enden (14, 20b) aufweisen, die untereinander verbunden sind, und hohe Enden (13, 23) aufweisen, zwischen denen sich die Trittbrett-Anordnung (61) in der Fahrt-Konfiguration erstreckt,
**dadurch gekennzeichnet, dass** die Trittbrett-Anordnung (61) an einem Ende ein Gelenk (70) aufweist, welches die Anordnung in schwenkbarer Weise mit einem der unteren Abschnitte (22; 12) verbindet.

2. Zweirad nach Anspruch 1, wobei der untere Abschnitt (12) des ersten Rahmen-Elements (10) eine gebogene Form mit einer Konkavität aufweist, die im Wesentlichen zu der Sattel-Anordnung (9) hin orientiert ist.

3. Zweirad nach Anspruch 1 oder 2, wobei der untere Abschnitt (22) des zweiten Rahmen-Elements (20) eine gebogene Form mit einer Konkavität aufweist, die im Wesentlichen nach vorne orientiert ist.

4. Zweirad nach einem der vorhergehenden Ansprüche, wobei die Trittbrett-Anordnung (61) sich im Wesentlichen horizontal erstreckt, mit einer oberen Fläche (64), die sich in einer Höhe befindet, welche zwischen der Höhe der Radachse und 45 cm liegt.

5. Zweirad nach einem der vorhergehenden Ansprüche, wobei der untere Abschnitt (22) des zweiten Rahmen-Elements (20) ein Tretlager-Gehäuse (42) umfasst, wobei das Gehäuse von dem niedrigen Ende (20b) des unteren Abschnitts beabstandet angeordnet ist.

6. Zweirad nach einem der vorhergehenden Ansprüche, wobei die Trittbrett-Anordnung (61) an einem dem Gelenk (70) gegenüberliegenden Ende eine Verriegelungseinrichtung (80) umfasst, welche die Trittbrett-Anordnung mit dem anderen unteren Abschnitt (12; 22) in entriegelbarer Weise verbindet.

7. Zweirad nach einem der vorhergehenden Ansprüche, wobei die Trittbrett-Anordnung (61) ein äußeres elektrisches Anschluss-Element (68) umfasst, wobei das Anschluss-Element in der Nähe von dem Gelenk (70) angeordnet ist.

8. Zweirad nach einem der vorhergehenden Ansprüche, wobei das Batterie-Gehäuse (52) in abnehmbarer Weise an der Trittbrett-Anordnung (61) angebracht ist.

9. Zweirad nach einem der Ansprüche 6 bis 8, wobei das Gelenk (70) der Trittbrett-Anordnung (61), welches bevorzugt mit dem zweiten Rahmen-Element (20) verbunden ist, ein Schwenken um eine horizontale Querachse (71) erlaubt, was es ermöglicht, die Trittbrett-Anordnung von der Fahrt-Konfiguration zu einer im Wesentlichen vertikalen Konfiguration zu verstellen, welche "Abnahme-Konfiguration" genannt wird.

10. Zweirad nach Anspruch 9, wobei die Verriegelungseinrichtung (80) dazu angepasst ist, die Trittbrett-Anordnung in der Abnahme-Konfiguration zu verriegeln.

11. Zweirad nach Anspruch 10, wobei die Verriegelungseinrichtung (80) ein bewegliches Element (81) umfasst, welches an der Trittbrett-Anordnung (61) angebracht ist, und ein erstes Schließ-Element (87) umfasst, das fest an einem der Rahmen-Elemente (10; 20) montiert ist, und ein zweites Schließ-Element (88) umfasst, das fest an dem anderen Rahmen-Element (20; 10) montiert ist, wobei das bewegliche Element (81) in die verriegelte Position vorgespannt ist, und das erste und das zweite Schließ-Element (87, 88) dazu konfiguriert sind, die Verriegelung automatisch sicherzustellen, wenn die Trittbrett-Anordnung (61) die Fahrt-Konfiguration oder die Abnahme-Konfiguration erreicht.

12. Zweirad nach einem der Ansprüche 8 bis 11, wobei das Batterie-Gehäuse (52) und die Trittbrett-Anordnung (61) in abnehmbarer Weise vermittels einer Schienen-Anordnung (56, 66) angebracht sind, was ein Lösen durch eine Translationsbewegung entlang einem Löse-Weg gestattet, der im Wesentlichen parallel zu der Trittbrett-Anordnung (61) und in einer Richtung entgegengesetzt zu dem Gelenk (70) von dieser verläuft.

## Claims

1. Electric two-wheeler comprising:
- a first frame element (10) extending from an upper end carrying a steering tube (6) of a front wheel to a lower end (10b),
- a second frame element (20) extending from an upper end receiving a seat unit (9) to a lower end (20b) rigidly fixed to the first frame element,
- a battery casing (52) arranged in a battery housing space (60) in rolling configuration, and
- an electric motor (50) driving one of the wheels,
the battery housing space being delimited at least in the vertical plane by a lower portion (12) of the first frame element (10), a lower portion (22) of the second frame element (20), and a footboard unit (61), said lower portions having bottom ends (14,20b) connected together and top ends (13,23) between which the footboard unit (61) extends in rolling configuration,
**characterized in that** the footboard unit (61) has, at one end, a hinge (70) pivotably connecting said footboard unit to one of the lower portions (22;12).

2. Two-wheeler according to claim 1, in which the lower portion (12) of the first frame element (10) has a concave-curved shape oriented substantially towards the seat unit (9).

3. Two-wheeler according to claim 1 or 2, in which the lower portion (22) of the second frame element (20) has a concave-curved shape oriented substantially forwards.

4. Two-wheeler according to one of the previous claims, in which the footboard unit (61) extends substantially horizontally with an upper surface (64) situated at a height comprised between the height of the axis of the wheels and 45 cm.

5. Two-wheeler according to one of the previous claims, in which the lower portion (22) of the second frame element (20) comprises a crankset housing (42), said housing being situated at a distance from the bottom end (20b) of said lower portion.

6. Two-wheeler according to one of the previous claims, in which the footboard unit (61) has, at an opposite end to the hinge (70), a locking device (80) connecting said unit to the other lower portion (12;22) in unlockable manner.

7. Two-wheeler according to one of the previous claims, in which the footboard unit (61) has an external electrical connection member (68), said connection member being arranged close to the hinge (70).

8. Two-wheeler according to one of the previous claims, in which the battery casing (52) is detachably attached to the footboard unit (61).

9. Two-wheeler according to one of claims 6 to 8, in which the hinge (70) of the footboard unit (61), preferably connected to the second frame element (20), allows pivoting about a transversal horizontal axis (71) allowing said footboard unit to pass from the rolling configuration to a substantially vertical configuration, called "removal configuration".

10. Two-wheeler according to claim 9, in which the locking device (80) is suitable for locking the footboard unit in the removal configuration.

11. Two-wheeler according to claim 10, in which the locking device (80) comprises a mobile member (81) mounted on the footboard unit (61) and a first strike member (87) mounted in a fixed manner on one of the frame elements (10;20), and a second strike member (88) mounted in fixed manner on the other frame element (20;10), said mobile member (81) being biased toward the locked position and the first and second strike members (87, 88) being configured to automatically ensure locking when the footboard unit (61) reaches one of the rolling and removal configurations.

12. Two-wheeler according to one of claims 8 to 11, in which the battery casing (52) and the footboard unit (61) are attached in detachable manner by a set of tracks (56, 66) allowing disengagement in translational motion over a disengagement course substantially parallel to the footboard unit (61) and in an opposite direction to the hinge (70) thereof.
